# EUROPEAN PATENT SPECIFICATION

(11) **EP 1 354 736 B1**
(45) Date of publication and mention of the grant of the patent: **05.07.2006**
(21) Application number: 03006790.4
(22) Date of filing: 26.03.2003
(51) Int. Cl.: B60H 1/24

(54) **Motor vehicle with means for changing the air inside the cabin**
Kraftfahrzeug mit Mittel zur Änderung der Luft im Innenraum
Véhicule automobile avec des moyens pour changer l'air dans l'habitacle

(30) Priority: 19.04.2002 IT MI20020842
(43) Date of publication of application: 22.10.2003
(73) Proprietor: Castiglione Giuseppe, 25075 Nave (Prov. of Brescia) (IT)
(72) Inventor: Castiglione Giuseppe, 25075 Nave (Prov. of Brescia) (IT)
(74) Representative: Crippa, Paolo Ernesto

(56) References cited:
- DE-A- 2 803 624
- US-A- 5 261 855
- US-B1- 6 186 886
- PATENT ABSTRACTS OF JAPAN vol. 010, no. 122 (M-476), 7 May 1986 (1986-05-07) -& JP 60 252019 A (NIPPON DENSO KK), 12 December 1985 (1985-12-12)

## Description

The present invention relates to a motor vehicle with means for changing the air inside the cabin.

As is known, there is a current trend to considerably use motor vehicles, and therefore it is increasingly necessary to make the motor vehicle comfortable in view of the fact that the time spent in it by the user is considerable.

Currently, very limited changes of air are generally performed in the cabins of motor vehicles, because both climate control systems and ordinary ventilation systems have small air outlets and do not actually aspirate the air from the inside the vehicle to expel it outside.

Accordingly, the air inside the cabin can be stale in some cases, and this aspect is felt even more strongly in the presence of smokers.

The aim of the invention is to solve the problem noted above, by providing a motor vehicle with means for changing the air inside the cabin that allows to have a continuous and forced air change, thus making the travelers' stay on board much more pleasant. Similar devices are described in documents: DE 2803624 A1, JP 60252019 and US 5261855.

Another object of the present invention is to provide a motor vehicle that thanks to its particular constructive characteristics is capable of giving the greatest assurances of reliability and safety in use.

This aim and these and other objects that will become better apparent hereinafter are achieved by a motor vehicle with the features of claim 1.

Further characteristics and advantages of the invention will become better apparent from the description of a preferred but not exclusive embodiment of a motor vehicle in general with means for changing the air in the cabin, illustrated only by way of non-limitative example in the accompanying drawings, wherein:

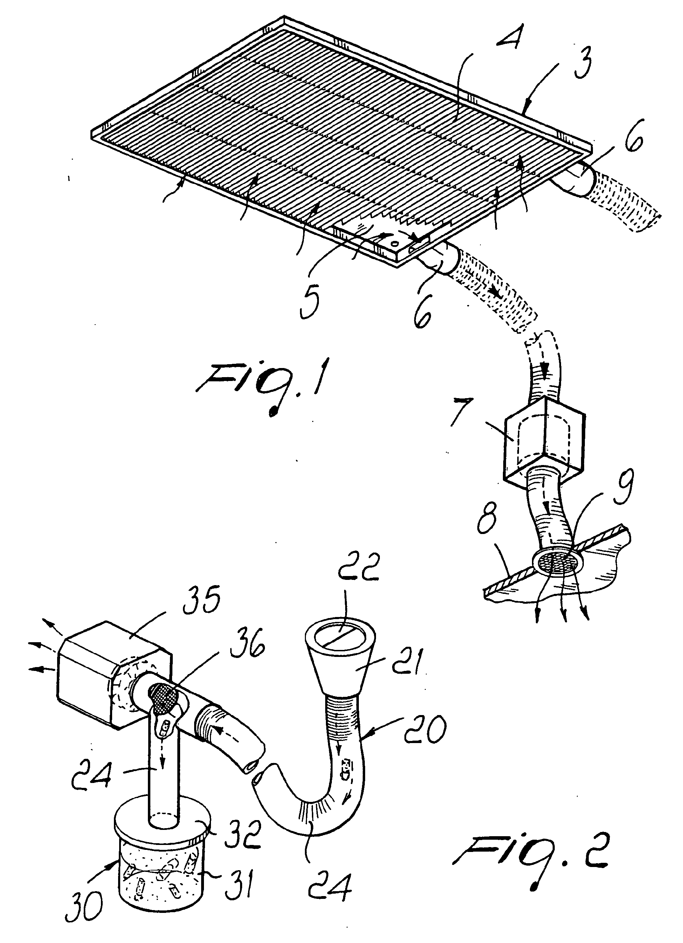

Figure 1 is a schematic perspective view of the air suction means;
Figure 2 is not part of the present invention and it is a perspective schematic view of an ashtray applied to the motor vehicle;

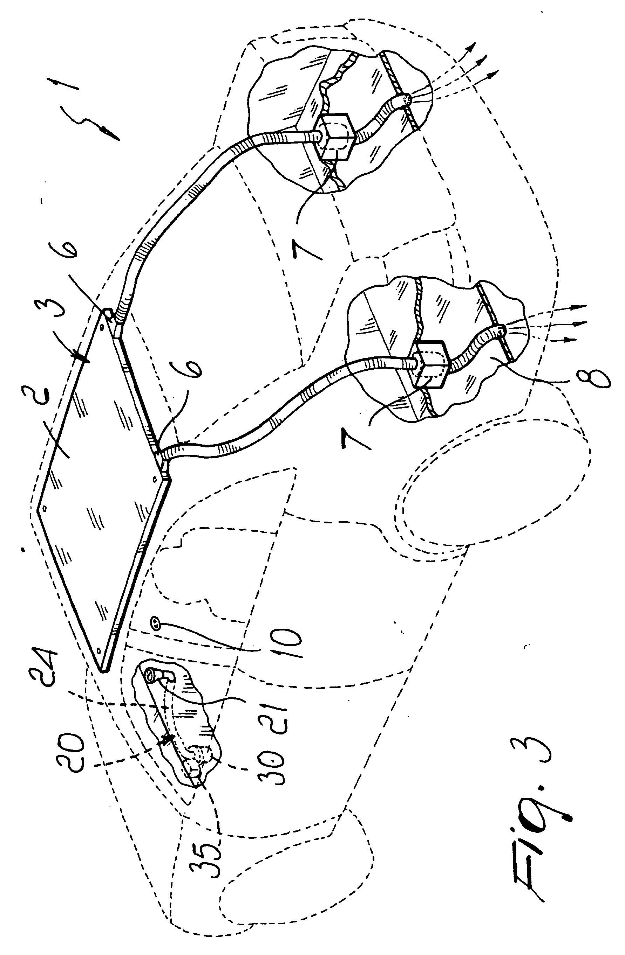

Figure 3 is a perspective view of a motor vehicle with the air suction means and with the ashtray.

With reference to the figures, the motor vehicle in general with means for changing the air inside the cabin, according to the invention, generally designated by the reference numeral 1, comprises at the roof of the cabin, designated by the reference numeral 2, air suction means, which have a box-like body 3 that is structured so as to affect most of the roof of the cabin, possibly leaving free a small central portion in the front part due to the presence of any further accessories of the motor vehicle.

The box-like body 3 has, on its face that is directed toward the cabin, a grilled portion 4 which is preferably provided with a plurality of laminas that lie transversely and are arranged side by side.

The grilled portion 4 forms a chamber 5 at which suction ducts 6 end; such ducts are advantageously spaced and located at the rear lateral regions of the chamber, so as to achieve very uniform suction.

The grilled portion 4 is advantageously of the removable type, so as to allow easy cleaning.

Aspirators 7 are provided on the suction ducts 6, which advantageously extend toward the rear part of the motor vehicle, and are preferably arranged at the free space formed in the region of the trunk of the vehicle.

The ducts 6 lead outside, preferably at the floor pan 8 or optionally in the bumper, and are closed by an outlet grille 9 that prevents the accidental entry of insects, soil and so forth.

The aspirators 7 preferably have two speeds and can be arranged in small compartments provided under the floor pan 8 of the trunk or in any other free space.

There is also an actuation switch 10, which is advantageously located on the dashboard.

In order to make the vehicle particularly comfortable, there is also an ashtray, generally designated by the reference numeral 20, which is designed to extinguish the stubs, but it is not part of the present invention.

The ashtray 20 has an intake 21, which is preferably located in the central part of the dashboard and is provided with closure shutters 22 that close automatically or manually and are provided for example by means of retractable hemispheres.

A conveyance tube 24, made of fireproof material, is connected to the intake 21 and reaches a stub extinguishing container 30, which has a container body 31 provided with a lid 32 onto which the end portion of the conveyor 24 engages.

Water to extinguish the stubs immediately can be introduced in the container body 31.

In a central portion of the conveyance tube 24 there is a stub aspirator 35, provided with a suction grille 36, which is arranged at the upper end of the end portion of the conveyance tube 24 above the container body 31, so that the stubs entrained by the generated air flow strike the grille, which can be provided by means of a filter 36 that can be removed to clean it and/or replace it, fall into the container 31, where they are extinguished automatically.

The aspirator 35 can be activated directly by the closure shutters 22, which accordingly also act as a switch for activating the ashtray.

The container body 31 is advantageously provided in an easily accessible region, so that it can be removed easily to dispose of its contents and to refill it with a dose of water that extinguishes the stubs immediately.

From the above description it is therefore evident that the invention achieves the proposed aim and objects, and in particular the fact is stressed that a motor vehicle is provided in which there are two extremely important elements that can be optionally used independently of each other.

In practice, it is possible to provide a suction device that produces a forced air changing inside the motor vehicle and which by extending along substantially the entire surface of the roof of the cabin allows to provide optimum air aspiration.

Moreover, it is possible to provide an ashtray of a new type, which allows to remove the stubs automatically from the interior of the vehicle, extinguishing them immediately and preventing bad odors from returning toward the vehicle cabin.

The invention thus conceived is susceptible of numerous modifications and variations, all of which are within the scope of the appended claims.

All the details may further be replaced with other technically equivalent elements.

In practice, the materials used, as well as the dimensions and the contingent shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A motor vehicle (1) with means for changing the air inside the cabin, comprising:
- air suction means (2) having a box like body (3) arranged at the roof of the cabin;
- at least one suction duct (6) that leads outside said vehicle;
**characterised in that** said box-like body (3) affects most of said roof and has, on a face directed toward the cabin and opposite said roof, a detachable grilled portion (4) covering completly said face in order to form a chamber (5) inside said box-like body (3), and said chamber (5) is connected to said at least one suction duct (6).

2. The motor vehicle according to one or more of the preceding claims, **characterized in that** said grilled portion (4) has laminas that are arranged transversely and side by side.

3. The motor vehicle according to one or more of the preceding claims, **characterized in that** it comprises two suction ducts (6), which are connected to said chamber (5) and end externally at a floor pan of the vehicle.

4. The motor vehicle according to one or more of the preceding claims, **characterized in that** it comprises two suction ducts (6) that lead into the bumper.

5. The motor vehicle according to one or more of the preceding claims, **characterized in that** it comprises an exit grille (9) located at an end of said suction ducts (6).

6. The motor vehicle according to one or more of the preceding claims, **characterized in that** it comprises aspirators (7) that are interposed on said at least one suction duct (6).

7. The motor vehicle according to claim 6, **characterized in that** said aspirators (7) have two speeds.

8. The motor vehicle according to claim 6 or 7, **characterized in that** said aspirators (7) are located under the floor pan (8) of the trunk of the vehicle.

9. The motor vehicle according to one or more of claims 6-8, **characterized in that** it comprises a switch (10) for operating said aspirators (7), which is located on the dashboard of the motor vehicle (1).

## Patentansprüche

1. Kraftfahrzeug (1) mit Mitteln zum Austausch der Luft im Innenraum, umfassend:
- Luftabsaugmittel (2) mit einem kastenförmigen Gehäuse (3), das am Dach des Innenraums angeordnet ist;
- zumindest einen Absaugkanal (6), der aus dem Fahrzeug nach draußen führt;
**dadurch gekennzeichnet, dass** das kastenförmige Gehäuse (3) den größten Teil des Daches einnimmt und an einer Fläche, die dem Innenraum zugewandt und dem genannten Dach entgegengesetzt ist, einen abnehmbaren Gitterabschnitt (4) aufweist, der die genannte Fläche vollständig überdeckt, um eine Kammer (5) innerhalb des genannten kastenförmigen Gehäuses (3) zu bilden, wobei die genannte Kammer (5) mit dem zumindest einen Absaugkanal (6) verbunden ist.

2. Kraftfahrzeug nach einem oder mehreren der vorhergehenden Ansprüche, **dadurch gekennzeichnet, dass** der Gitterabschnitt (4) Lamellen aufweist, die quer und nebeneinander angeordnet sind.

3. Kraftfahrzeug nach einem oder mehreren der vorhergehenden Ansprüche, **dadurch gekennzeichnet, dass** es zwei Absaugkanäle (6) umfasst, die mit der genannten Kammer (5) verbunden sind und außen an einer Bodengruppe des Fahrzeugs enden.

4. Kraftfahrzeug nach einem oder mehreren der vorhergehenden Ansprüche, **dadurch gekennzeichnet, dass** es zwei Absaugkanäle (6) umfasst, die in die Stoßstange führen.

5. Kraftfahrzeug nach einem oder mehreren der vorhergehenden Ansprüche, **dadurch gekennzeichnet, dass** es ein Austrittsgitter (9) umfasst, das sich an einem Ende der genannten Absaugkanäle (6) befindet.

6. Kraftfahrzeug nach einem oder mehreren der vorhergehenden Ansprüche, **dadurch gekennzeichnet, dass** es Sauggebläse (7) umfasst, die in dem genannten zumindest einen Absaugkanal (6) eingefügt sind.

7. Kraftfahrzeug nach Anspruch 6, **dadurch gekennzeichnet, dass** die genannten Sauggebläse (7) zwei Geschwindigkeiten haben.

8. Kraftfahrzeug nach Anspruch 6 oder 7, **dadurch gekennzeichnet, dass** sich die genannten Sauggebläse (7) unter der Bodengruppe (8) des Fahrzeugkofferraums befinden.

9. Kraftfahrzeug nach einem oder mehreren der Ansprüche 6 - 8, **dadurch gekennzeichnet, dass** es einen Schalter (10) zum Betrieb der genannten Sauggebläse (7) aufweist, der am Armaturenbrett des Fahrzeugs (1) vorgesehen ist.

## Revendications

1. Véhicule automobile (1) avec des moyens pour changer l'air dans l'habitacle, comprenant:
- des moyens d'aspiration d'air (2) ayant un corps similaire à un boîtier (3) agencés au plafond de l'habitacle ;
- au moins un conduit d'aspiration (6) qui aboutit à l'extérieur dudit véhicule ;
**caractérisé en ce que** ledit corps similaire à un boîtier (3) influence la majorité dudit plafond et a, sur une face dirigée vers l'habitacle et opposée au dit plafond, une partie de grille détachable (4) couvrant entièrement ladite face afin de former une chambre (5) à l'intérieur dudit corps similaire à un boîtier (3), et ladite chambre (5) est reliée au dit au moins un conduit d'aspiration (6).

2. Véhicule automobile selon une ou plusieurs des revendications précédentes, **caractérisé en ce que** ladite partie de grille (4) a des feuilles agencées de manière transversale et côte à côte.

3. Véhicule automobile selon une ou plusieurs des revendications précédentes, **caractérisé en ce qu'**il comprend deux conduits d'aspiration (6) qui sont reliés à ladite chambre (5) et aboutissent à l'extérieur au niveau d'un panneau du plancher du véhicule.

4. Véhicule automobile selon une ou plusieurs des revendications précédentes, **caractérisé en ce qu'**il comprend deux conduits d'aspiration (6) qui aboutissent à l'intérieur du pare-choc.

5. Véhicule automobile selon une ou plusieurs des revendications précédentes, **caractérisé en ce qu'**il comprend une grille de sortie (9) située à une extrémité desdits conduits d'aspiration (6).

6. Véhicule automobile selon une ou plusieurs des revendications précédentes, **caractérisé en ce qu'**il comprend des aspirateurs (7) qui sont interposés sur ledit au moins un conduit d'aspiration (6).

7. Véhicule automobile selon la revendication 6, **caractérisé en ce que** lesdits aspirateurs (7) ont deux vitesses.

8. Véhicule automobile selon la revendication 6 ou la revendication 7, **caractérisé en ce que** lesdits aspirateurs (7) sont situés sous la panneau du plancher (8) du coffre du véhicule.

9. Véhicule automobile selon une ou plusieurs des revendications 6 à 8, **caractérisé en ce qu'**il comprend un commutateur (10) pour activer lesdits aspirateurs (7), qui est situé sur le tableau de bord du véhicule automobile (1).
